# EUROPÄISCHE PATENTANMELDUNG

(11) **EP 1 239 395 A2**
(43) Veröffentlichungstag der Anmeldung: **11.09.2002**
(21) Anmeldenummer: 02450022.5
(22) Anmeldetag: 04.02.2002
(51) Int. Cl.: G06F 17/60

(54) **Einrichtung und Verfahren zum Versenden von Werbeinformation**

(30) Priorität: 09.02.2001 AT 1062001
(71) Anmelder: Lepuschitz, Günter, 1020 Wien (AT)
(72) Erfinder: Lepuschitz, Günter, 1020 Wien (AT)
(74) Vertreter: Heger, Georg, Dipl.-Ing., Dr.

(57) **Zusammenfassung**

Die vorliegende Erfindung betrifft eine Einrichtung und ein Verfahren zum Versenden von Werbeinformation an Kunden über ein Kommunikationsmedium (3), insbesondere das Internet, mit einer Datenbank (DB1) zur Speicherung von Kundendaten, einer zweiten Datenbank (DB2) zur Speicherung der Werbeinformation, zumindest einem Rechner zur Verbindung der Datenbanken (DB1, DB2) mit dem Kommunikationsmedium (3) und zumindest einer Bearbeitungseinheit (2) zur Kommunikation des Kunden, welche Bearbeitungseinheit (2) zur Eingabe der Kundendaten zur Anmeldung und zur Eingabe von Daten zur Bereitschaft des Empfangs von Werbeinformation vorgesehen ist, und wobei die Bereitschaftsdaten in der Datenbank (DB1) gespeichert werden und in Abhängigkeit dieser Daten die in der zweiten Datenbank (DB2) gespeicherte Werbeinformation an den Kunden versendet wird. Um die Erreichbarkeit des Kunden zu garantieren und somit eine Wertsicherung der Werbung zu ermöglichen, ist vorgesehen, dass eine weitere Datenbank (DB4) zur Speicherung kundenspezifischen Buchungsdaten vorgesehen ist, und dass weiters eine Zähleinrichtung (4) vorgesehen ist, welche die Buchungsdaten in Abhängigkeit des Versendens von Werbeinformation oder des Empfangs von Antwortsdaten auf Fragebögen od. dgl. erhöht.

## Beschreibung

Die Erfindung betrifft eine Einrichtung zum Versenden von Werbeinformation an Kunden über ein Kommunikationsmedium, insbesondere das Internet, mit einer ersten Datenbank zur Speicherung von Kundendaten, einer zweiten Datenbank zur Speicherung der Werbeinformation, zumindest einem Rechner zur Verbindung der Datenbanken mit dem Kommunikationsmedium und zumindest einer Bearbeitungseinheit zur Kommunikation des Kunden, welche Bearbeitungseinheit zur Eingabe der Kundendaten zur Anmeldung und zur Eingabe von Daten zur Bereitschaft des Empfangs von Werbeinformation vorgesehen ist, und wobei die Bereitschaftsdaten in der Datenbank gespeichert werden und in Abhängigkeit dieser Daten die in der zweiten Datenbank gespeicherte Werbeinformation an den Kunden versendet wird.

Weiters bezieht sich die Erfindung auf ein Verfahren zum Versenden von Werbeinformation an Kunden über ein Kommunikationsmedium, insbesondere das Internet, umfassend das Eingeben und Senden der Kundendaten über das Kommunikationsmedium, Speichern der Kundendaten in einer Datenbank, Anfordern der Werbeinformation durch den Kunden über das Kommunikationsmedium und Versenden der Werbeinformation an den Kunden in Abhängigkeit der Anforderung.

Die Bedeutung von Werbung, insbesondere in modernen Kommunikationsmedien, wie z.B. dem Internet, ist besonders hoch, da eine Finanzierung oft nur über die Werbung möglich ist. Die werbenden Unternehmen sind daran interessiert, dass ihre Werbung eine möglichst große Reichweite erlangt und für interessierte Kunden möglichst gut erreichbar ist.

Das Medium des Internets eignet sich für das Erlangen einer besonders großen Reichweite sehr, da dieses weltweite Netzwerk von einer ungeheuren Anzahl Personen benutzt wird. Dementsprechend werden viele Homepages mit Werbebannern mit unterschiedlichsten Werbeinformationen versehen. Es wird versucht, für jede Werbeinformation die richtige Zielgruppe anzusprechen. Dies geschieht häufig branchenspezifisch, indem beispielsweise eine spezielle Website mit Werbeinformation derselben Branche bzw. verwandter Branchen versehen wird, um auf diese Weise eine möglichst hohe Umwegrentabilität zu erzielen. Je größer der Erfolg für das werbende Unternehmen, desto höher sind auch die Preise, welche für die Werbeschaltungen bezahlt werden. Eine andere Möglichkeit zur gezielten Versendung von Werbeinformation ist die Kenntnis diverser Charakteristika der Kunden. Zu solchen Kriterien gehören im Internet die Kategorie der vom Kunden besuchten Websites, der geografische Standort, das Betriebssystem des Computers des Kunden, der Domainnamentyp des Kunden und vieles mehr. Eine verbesserte Methode zur Bereitstellung von Werbeinformation von einem Zentralrechner zu Kunden, welche das Internet benützen, ist beispielsweise aus der WO 98/34189 A1 bekannt. Dieses System umfasst eine Datenbank für die Kundendaten sowie eine Datenbank zur Ablage der Werbeinformation, die angezeigt werden soll. Durch die Kenntnis mancher Kundendaten werden bestimmte Kategorien an Werbung ausgewählt und auf die Internetseite, welche der Kunde öffnet, projiziert. Die Kosten für die Schaltung der Werbung steigen, je mehr Kriterien von Internetbenützern für die Auswahl der jeweiligen Werbeinformation angefordert und benützt werden. Derartige Systeme weisen dennoch den Nachteil auf, dass die Werbung dem Kunden aufgezwungen wird und darüber hinaus die Auswahlkriterien, welche Werbung für den jeweiligen Kunden interessant sein könnte, häufig falsch ausgewählt sind, wodurch sich die Werbung für bestimmte Produkte oder Dienstleistungen nur in begrenztem Maß für die werbende Firma auszahlt.

Weitere Verfahren und Einrichtungen zur Übermittlung kundenspezifischer Werbeinformationen sind aus der WO 00/67092 A oder der JP 11-282393 A bekannt.

Eine Einrichtung und ein Verfahren der gegenständlichen Art ist aus der WO 00/13434 A2 bekannt, wobei zum gezielten Versenden von Werbeinformation an den Kunden in einer Datenbank Kundendaten gespeichert werden und in einer weiteren Datenbank Werbeinformation gespeichert wird, wobei die Werbeinformation in Abhängigkeit der Kundendaten dem Kunden präsentiert wird. Zur Eingabe von Auswahldaten für bestimmte Werbegruppen sind Bearbeitungseinheiten, wie Computer, Telefonapparate, Faxgeräte, Fernsehapparate od. dgl., möglich.

Obwohl hauptsächlich auf das Internet als Kommunikationsmedium eingegangen wird, ist der Gegenstand der vorliegenden Anmeldung ebenso für andere Kommunikationsmedien und Kommunikationsmöglichkeiten, wie z.B. WAP (wireless application protocol), E-Mail bzw. UMTS-Mobiltelefonsystem (universal mobile telecommunications system), GPRS-Mobiltelefonsystem (General Packet Radio System) oder andere gegenwärtige und zukünftige Kommunikationssysteme geeignet.

Mit den gängigen Kommunikationsmedien, wie Fernsehen, Postwurfsendungen, WAP, Werbebanner im Internet, E-Mail und dergleichen, ist es einer werbenden Firma nicht möglich, die Erreichbarkeit des Konsumenten zu garantieren, und somit ist auch eine Wertsicherung der Werbung nicht möglich.

Aufgabe der vorliegenden Erfindung ist daher die Schaffung einer Einrichtung sowie eines Verfahrens zum Versenden von Werbeinformation, wobei die Erreichbarkeit des Konsumenten garantiert werden kann und somit eine Wertsicherung der Werbung möglich wird. Nachteile bekannter Verfahren sollen vermieden bzw. reduziert werden.

Die erfindungsgemäße Einrichtung der eingangs angeführten Art ist dadurch gekennzeichnet, dass eine weitere Datenbank zur Speicherung von kundenspezifischen Buchungsdaten vorgesehen ist, und dass weiters eine Zähleinrichtung vorgesehen ist, welche die Buchungsdaten in Abhängigkeit des Versendens von Werbeinformation oder des Empfangs von Antwortsdaten auf Fragebögen od. dgl. erhöht. Dadurch kann ein Anreiz für den Kunden für einen aktiven Konsum der Werbeinformation geschaffen werden, da dem Kunden für die Bereitschaft zum Empfang von Werbeinformation oder für das Ausfüllen eines Fragebogens od. dgl. eine Gegenleistung geboten wird. Die Gegenleistung kann in Form einer finanziellen Gutschrift oder verschiedenen anderen Dienstleistungen, insbesondere im Internet, gebildet sein.

Mit der vorliegenden Einrichtung wird gewährleistet, dass der Konsument die Werbeinformation aktiv konsumiert. Dadurch wird erreicht, dass der Kunde ausschließlich die von ihm gewünschte Werbung erhält. Auf Grund der Kenntnis mancher Kundendaten, welche freiwillig in die Datenbank eingegeben wurden, kann eine Vorselektion der Werbeinformation erfolgen. Der Kunde erhält die Werbeinformation auf eigenem Wunsch zu den von ihm gewünschten Zeiten. Durch diese Bereitschaftshaltung des Konsumenten wird die Wahrscheinlichkeit des Erfolges der Werbung vergrößert und die Erreichbarkeit des Kunden garantiert. Somit ist eine Wertsicherung der Werbung mit dieser Einrichtung möglich.

Gemäß einem weiteren Merkmal der Erfindung ist eine Bearbeitungseinheit zur Eingabe von Auswahldaten für gewünschte Werbegruppen vorgesehen, wobei die Auswahldaten in der Kundendatenbank speicherbar sind und die in der zweiten Datenbank gespeicherte Werbeinformation in Abhängigkeit der Auswahldaten nach Anforderung an den Kunden versendet wird. Durch diese Maßnahmen kann eine noch größere Einschränkung der den jeweiligen Kunden konkret interessierenden Werbung vorgenommen werden. Der Konsument kann somit eine auf seine Interessen maßgeschneiderte Werbeinformation erhalten.

Wenn eine weitere Datenbank zur Speicherung statistischer Daten vorgesehen ist, können damit für werbende Firmen sehr nützliche Information weitergegeben werden, welche nicht direkt mit den kundenspezifischen Daten der Kundendatenbank in Zusammenhang gebracht werden können, weshalb die Weitergabe von Daten aus der Statistikdatenbank keine Datenschutzverletzung darstellt. Es kann dabei eine Vielzahl von Kundendaten und werbespezifischen Informationen statistisch verarbeitet und in der Datenbank abgelegt werden.

Vorteilhafterweise ist die Bearbeitungseinheit durch einen Computer mit den erforderlichen Kommunikationseinrichtungen, wie z.B. einem Modem od. dgl., vorgesehen. Insbesondere bei Internetanwendungen ist diese Art der Bearbeitungseinheit an sich üblich und zweckmäßig.

Ebenso kann die Bearbeitungseinheit durch ein Telefon, insbesondere ein Mobiltelefon, gebildet sein, welches mittels des modernen WAP (wireless application protocol) oder via E-Mail mit dem jeweiligen Kommuniktionsmedium, insbesondere dem Internet oder dem jeweiligen Mobiltelefonnetz, kommuniziert. Bei Mobiltelefonen erlauben die zukünftigen Systeme, wie UMTS (universal mobile telecommunications system) oder GPRS (General Packet Radio System) wesentlich höhere Datentransferaten, weshalb auch über diese Einrichtungen verstärkt Werbeinformation übermittelt werden kann.

Wenn eine Einrichtung zur Generierung eines Fragebogens od. dgl. vorgesehen ist, welcher Fragebogen od. dgl. mit der angeforderten Werbeinformation an den Kunden versendet wird, und weiters die Bearbeitungseinheit zur Eingabe von Antwortdaten auf den Fragebogen od. dgl. vorgesehen ist, so dass diese Antwortdaten in der Statistikdatenbank abgelegt werden, kann eine weitere Erhöhung der Erreichbarkeit des Konsumenten und eine noch engere Eingrenzung der jeweils interessierenden Werbung erreicht werden. Gleichzeitig können derartige Fragebögen für viele weitere von der Werbung unabhängige Zwecke verwendet und ausgenützt werden, sofern die Anonymität der Kunden gewahrt bleibt.

Um einen Missbrauch zu vermeiden, kann eine Prüfeinrichtung vorgesehen sein, welche die Antwortdaten auf den Fragebogen od. dgl. einer Prüfung unterzieht, bevor die Erhöhung der Buchungsdaten in der Buchungsdatenbank vorgenommen wird.

Gemäß einem weiteren Merkmal der Erfindung sind eine Auswahleinheit, welche mit der Werbedatenbank und der Statistikdatenbank verbunden ist, und weiters eine weitere Bearbeitungseinheit vorgesehen, über welche Daten an die Auswahleinheit übermittelbar sind, so dass die Werbeinformation der Werbedatenbank auf Grund ausgewählter Daten der Statistikdatenbank ausgewählt wird. Mit dieser Zusatzeinrichtung kann eine weitere Verbesserung der Erreichbarkeit bestimmter Konsumenten in automatisierter Weise geschehen. Dabei können natürlich die Kriterien für eine Auswahl ständig an bestimmte Gegebenheiten angepasst und verändert werden.

Vorteilhafterweise ist eine Zeiterfassungseinheit vorgesehen, welche die Zeiten der Anforderung von Werbeinformation von Kunden erfasst und in der Datenbank für die Speicherung der Kundendaten und allenfalls in der Datenbank für statistische Daten speichert. Über die Ermittlung der bevorzugten Abrufzeiten der Werbeinformation können weitere interessante Daten, welche eine weitere Verbesserung der Werbeversendung erlauben, erzielt werden.

In entsprechender Weise wird die gestellte Aufgabe auch durch ein eingangs erwähntes Verfahren zum Versenden von Werbeinformation gelöst, welches gekennzeichnet ist durch eine mit dem Versenden der Werbeinformation gleichzeitige oder zeitverschobene Übermittlung eines Fragebogens od. dgl. an den Kunden und eine Zuweisung eines Guthabens an den Kunden nach Übermittlung der gewünschten Antwortsdaten.

Vorteilhafterweise wählt der Kunde eine bestimmte Werbebranche aus, worauf diese Auswahl gespeichert wird und die Werbeinformation der ausgewählten Werbebranchen auf Anforderung an den Kunden versendet wird.

Die Versendung der Werbeinformation kann dabei zeitversetzt erfolgen. Die Dauer des Zeitversatzes kann entweder vom Kunden oder vom werbenden Unternehmen bestimmt werden.

Wenn gleichzeitig oder zeitverschoben mit der angeforderten Werbeinformation ein Fragebogen od. dgl. an den Kunden übermittelt wird und nach Übermittlung der gewünschten Antwortdaten dem Kunden ein Guthaben zugewiesen wird, kann der Anreiz für aktive Werbung erhöht werden. Das Guthaben kann in einem Geldwert, einem Sachwert oder einer bestimmten Dienstleistung bestehen.

Vor Zuweisung des Guthabens kann eine Überprüfung der Antwortsdaten erfolgen, so dass ein Missbrauch nicht leicht möglich ist.

Vorteilhafterweise erfolgt die Dateneingabe und/oder die Werbeanforderung und/oder die Werbeversendung über Internet. Darüber hinaus können die Kommunikationen auch über WAP (wireless application protocol) oder E-Mail oder Mischformen derselben erfolgen.

Die vorliegende Erfindung wird an Hand von bevorzugten Ausführungsbeispielen unter Bezugnahme auf die Zeichnung noch weiter erläutert.

Es zeigen:
Fig. 1 ein Schema einer erfindungsgemäßen Einrichtung zum Versenden von Werbeinformation an Kunden über ein Kommunikationsmedium, wie z.B. das Internet; und
Fig. 2 bis 9 Flussdiagramme über einzelne Verfahrensabläufe bei einer Ausführungsvariante des erfindungsgemäßen Verfahrens zum Versenden von Werbeinformation an Kunden über ein Kommunikationsmedium, insbesondere das Internet.

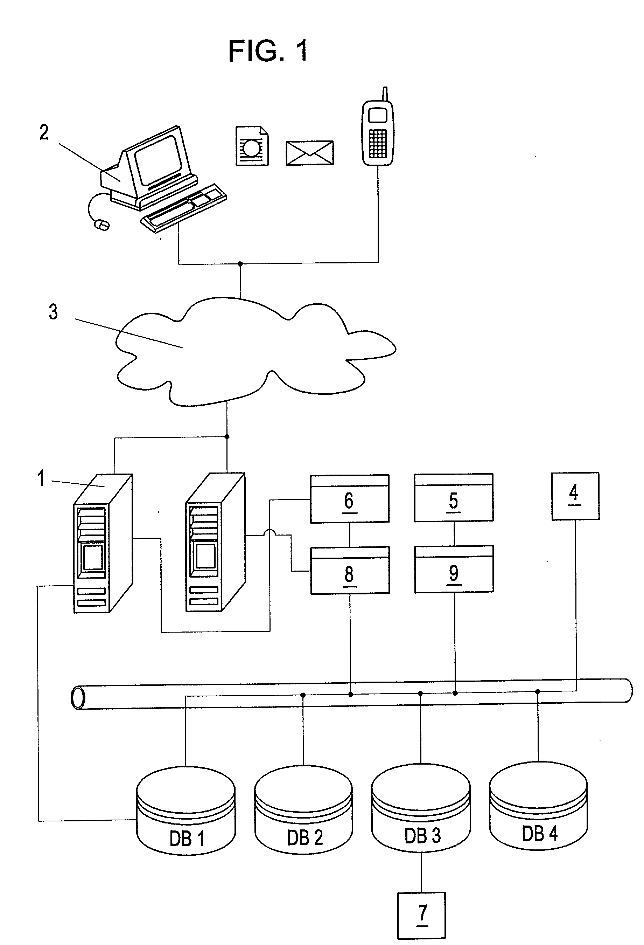

Fig. 1 zeigt eine Bearbeitungseinheit 2 zur Kommunikation eines Kunden über ein Kommunikationsmedium 3 mit einem Rechner 1, der mit einer Datenbank DB1 zur Speicherung von Kundendaten und einer Datenbank DB2 zur Speicherung von Werbeinformation verbunden ist. Bei der Bearbeitungseinheit 2 kann es sich um einen Computer mit allen notwendigen technischen Einrichtungen zur Verbindung mit dem Kommunikationsmedium 3 wie zum Beispiel ein Modem oder ein Mobiltelefon handeln. Das Kommunikationsmedium 3 kann das Internet oder ein anderes Netzwerk, wie beispielsweise ein Mobiltelefonnetz oder ein Kabelfernsehnetz, sein. Der Rechner 1 zur Verbindung der Datenbanken DB1 und DB2 mit dem Kunden über das Kommunikationsmedium 3 ist beispielsweise in einem zentralen Unternehmen, wie z.B. einem Provider für Internetdienste, angeordnet.

Der Konsument gibt persönliche Daten, wie Alter, Adresse, Interessen, Berufsgruppe, Einkommen od. dgl. über die Bearbeitungseinheit 2 ein und sendet diese über das Kommunikationsmedium 3 zum Rechner 1, der die entsprechenden Daten in der Kundendatenbank DB1 speichert.

Ein Werbeunternehmen stellt dem Provider die Werbeinformation auf der Datenbank DB2 zur Verfügung und kann die Zielgruppen, Zielregion und die Anzahl der Werbungen pro Werbeschaltung definieren. Der Konsument fordert durch Eingabe über die Bearbeitungseinheit 2 aktiv die Werbeinformation an, indem er seine Bereitschaft dazu erklärt. Abhängig von den Daten in der Datenbank DB1 und anderen Kriterien, wie z.B. Standort des Kunden od. dgl., wird vom Betreiber des Rechners 1 die Werbeinformation aus - der Werbedatenbank DB2 nach einem bestimmten Algorithmus dem Konsumenten zur Verfügung gestellt. Der Konsument holt die zur Verfügung gestellte Werbeinformation aktiv z.B. über das Internet, über WAP oder E-Mail od. dgl. vom Betreiber des Rechners 1 ab.

Zusätzlich zur Werbeinformation kann mittels einer Einrichtung 5 ein elektronischer "Fragebogen" generiert und an den Konsumenten geschickt werden, der diesen Fragebogen ausfüllt und über das Kommunikationsmedium 3 an den Rechner 1 übermittelt. Die Antwortsdaten auf dem Fragebogen od. dgl. werden vom Rechner 1 ausgewertet und in der Kundendatenbank DB1 und/oder einer weiteren Datenbank DB3 zur Speicherung von statistischen Daten gespeichert.

Ein weiterer Anreiz zur Beteiligung am Werbesystem kann geschaffen werden, wenn mit jedem richtig ausgefüllten Fragebogen in einer weiteren Datenbank DB4 eine Buchungszeile für den jeweiligen Konsumenten erzeugt wird. Zu diesem Zweck kann eine Zähleinrichtung 4 vorgesehen sein. Zur Vermeidung von Missbrauch kann eine Prüfeinrichtung 9 vorgesehen sein, welche die Antwortdaten auf dem Fragebogen od.dgl. vor einer Erhöhung der Buchungsdaten zu der Buchungsdatenbank DB4 überprüft. Diese Buchungszeile kann periodisch zum Abrechnungssystem eines Providers oder eines werbenden Unternehmens transferiert werden. Über eine Auswahleinheit 6, welche mit der Werbedatenbank DB2 und der Statistikdatenbank DB3 verbunden ist, kann die Werbeinformation der Datenbank DB2 aufgrund ausgewählter Daten der Statistikdatenbank DB3 ausgewählt werden. Die jeweiligen Auswahldaten können über eine weitere Bearbeitungseinheit 7 eingegeben und verändert werden. Über eine Zeiterfassungseinheit 8 können die Zeiten der Anforderung der Werbeinformation des Konsumenten erfasst und in der Datenbank DB1 und/oder DB3 zur weiteren Verwendung gespeichert werden.

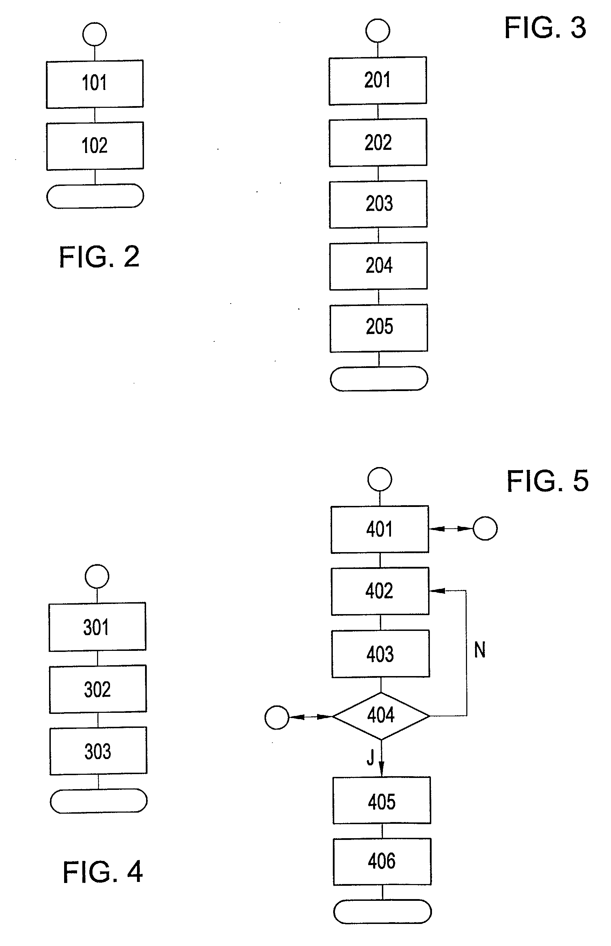

Die Fig. 2 bis 9 zeigen einzelne Verfahrensabläufe nunmehr im Detail.

Fig. 2 zeigt den Ablauf einer Anmeldung eines Kunden. Dabei öffnet der Kunde gemäß Block 101 die Website im Internet und geht auf die Anmeldeseite und trägt gemäß Block 102 seine Stammdaten und statistische Daten ein, welche in der Datenbank DB1 und der Datenbank DB3 abgelegt werden.

Fig. 3 zeigt das Ablaufschema für die Schaltung der Werbung durch ein werbendes Unternehmen. Gemäß Block 201 werden die Inhalte der Werbeschaltung bekanntgegeben, weiters entsprechend Block 202 die Fragen für die Versendung der Werbeinformation bekanntgegeben. In Block 203 geschieht die grafische Aufbereitung der Werbeinformationssendung, während gemäß Block 204 die gewünschte Zielgruppe definiert wird und die ausgewählten Werbeinformationen in der Werbedatenbank DB2 gemäß Block 205 gespeichert werden.

Fig. 4 zeigt die Abgabe der Bereitschaft des Kunden zum Empfang einer Werbeinformation. In Block 301 öffnet der Kunde beispielsweise im Internet die WebSite und wählt die Sparte "Subscribieren" aus. Entsprechend Block 302 kann der Kunde die gewünschten Werbegruppen nach Branchen oder Firmen auswählen, worauf entsprechend Block 303 die Information der Eintragung in der Datenbank DB1 über die Kundendaten und bzw. oder der Datenbank DB3 für statistische Informationen abgespeichert wird.

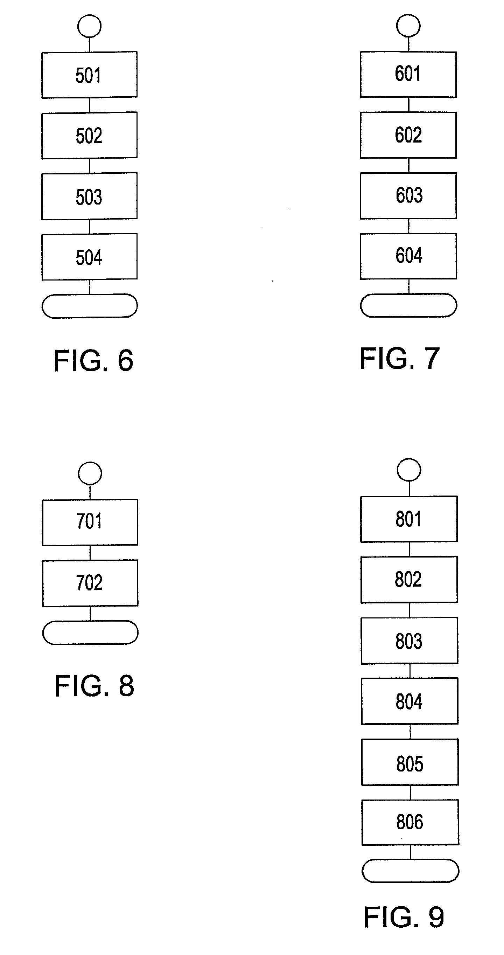

Fig. 5 zeigt den Ablauf der aktiven Konsumierung der Werbung durch den Kunden. Entsprechung Block 401 fordert der Kunde die für ihn zusammengestellte Werbeinformation an. In Block 402 liest der Kunde die Werbeinformation und füllt gegebenenfalls einen zugehörigen Fragebogen od. dgl. aus. Entsprechend Block 403 werden der ausgefüllte Fragebogen und die gewünschte Werbeinformation an den Rechner 1 geschickt, worauf entsprechend der Abfrage 404 eine Überprüfung erfolgen kann, ob der Fragebogen richtig ausgefüllt wurde (s. dazu Ablauf gemäß Fig. 7). Wenn der Fragebogen nicht richtig ausgefüllt wurde, kehrt das System zu Block 402 zurück. Im Falle eines korrekt beantworteten Fragebogens wird dieser in Block 405 gespeichert und entsprechend Block 406 eine Buchung auf der Buchungsdatenbank'DB4 durchgeführt.

Entsprechend Fig. 6 wird die entsprechende Werbeinformation zur Verfügung gestellt. In Block 501 wird der Kunde identifiziert, worauf in Block 502 die vom Kunden eingegebenen Auswahldaten für gewünschte Werbebranchen ausgewählt werden und in Block 503 der entsprechend ausgewählte Inhalt der Werbedatenbank DB2 überprüft wird und in Block 504 an den Kunden versendet wird.

Fig. 7 zeigt ein Ablaufschema der Überprüfung eines mit der Werbeinformation mitgesandten Fragebogens od. dgl. Im ersten Block 601 wird überprüft, ob der Fragebogen vom richtig angesprochenen Kunden stammt, worauf entsprechend Block 602 überprüft wird, ob der selbe Fragebogen schon einmal ausgefüllt und gesandt wurde. In Block 603 wird ein allfälliges überschrittenes Zeitlimit für die Beantwortung eines Fragebogens überprüft. Schließlich erfolgt in Block 604 noch eine Überprüfung der Antworten auf den Fragebogen auf Richtigkeit.

Fig. 8 zeigt zwei Verfahrensschritte im Falle der Kommunikation via E-Mail. In diesem Fall wird in Block 701 die gewünschte Werbeinformation, welche beispielsweise in HTML-Format vorliegt, zusammengestellt und konvertiert, und in Block 702 die HTML-Seite in Form einer E-Mail an den Kunden versendet.

Schließlich zeigt Fig. 9 ein Ablaufschema für die Administrierung der erfindungsgemäßen Einrichtung bzw. des erfindungsgemäßen Verfahrens. Entsprechend Block 801 können Kundendaten geändert werden und in der Datenbank DB1 abgelegt werden. Weiters können in Block 802 die in der Werbedatenbank DB2 abgelegten Werbeinformationen geändert werden und entsprechend Block 803 die Werbung administriert werden. In Block 804 kann eine grafische Aufbereitung der Werbeinformation erfolgen und entsprechend Block 805 eine Eingabe der gewünschten Verteilung der Werbeinformation erfolgen. Schließlich können in Block 806 die Statistiken zur Versendung der Werbeinformation entsprechend definiert und gespeichert werden.

Durch die vorliegende Einrichtung bzw. das Verfahren für werbende Firmen und Kunden kann für den Werbenden sichergestellt werden, dass der Konsument seine Werbung aktiv konsumiert. Mit Hilfe eines Providers od. dgl., der den Rechner zur Kommunikation und die entsprechenden Datenbanken wartet und betreibt, erhält der Konsument die von ihm angeforderte Werbeinformation. Durch richtiges Ausfüllen eines Fragebogens, welcher der Werbeinformation hinzugefügt sein kann und der Übermittlung beispielsweise eines Geldbetrages für richtig ausgefüllte Fragebögen, kann der Anreiz für den Konsumenten erhöht werden und können weiters wichtige Informationen über den Konsumenten bzw. das Konsumentenverhalten erhalten werden. Der Geldbetrag kann beispielsweise dem Kunden über eine Gutschrift oder Gegenverrechnung über den Provider erfolgen.

Durch die vorliegende Entwicklung werden Kooperationen zwischen Providern od. dgl. und werbenden Unternehmen gefördert und kann darüber hinaus ein für Provider oder werbende Unternehmen brauchbares Datenmaterial geschaffen werden, ohne die Anonymität der Konsumenten zu verletzen, wenn diese nicht ausdrücklich ihr Einverständnis dazu abgeben. Darüber hinaus sind gemeinsam mit der Werbeinformation interessante Analysen durchführbar durch Versand spezieller Fragebögen, worauf durch die Informationen über den Konsumenten Verhaltens- und Marktanalysen durchgeführt erden können.

## Patentansprüche

1. Einrichtung zum Versenden von Werbeinformation an Kunden über ein Kommunikationsmedium (3), insbesondere das Internet, mit einer Datenbank (DB1) zur Speicherung von Kundendaten, einer zweiten Datenbank (DB2) zur Speicherung der Werbeinformation, zumindest einem Rechner (1) zur Verbindung der Datenbanken (DB1, DB2) mit dem Kommunikationsmedium (3) und zumindest einer Bearbeitungseinheit (2) zur Kommunikation des Kunden, welche Bearbeitungseinheit (2) zur Eingabe der Kundendaten zur Anmeldung und zur Eingabe von Daten zur Bereitschaft des Empfangs von Werbeinformation vorgesehen ist, und wobei die Bereitschaftsdaten in der Datenbank (DB1) gespeichert werden, und in Abhängigkeit dieser Daten die in der zweiten Datenbank (DB2) gespeicherte Werbeinformation an den Kunden versendet wird, **dadurch gekennzeichnet, dass** eine weitere Datenbank (DB4) zur Speicherung von kundenspezifischen Buchungsdaten vorgesehen ist und dass weiters eine Zähleinrichtung (4) vorgesehen ist, welche die Buchungsdaten in Abhängigkeit des Versendens von Werbeinformation oder des Empfangs von Antwortsdaten auf Fragebögen od. dgl. erhöht.

2. Einrichtung nach Anspruch 1, **dadurch gekennzeichnet, dass** eine Bearbeitungseinheit (2) zur Eingabe von Auswahldaten für gewünschte Werbegruppen vorgesehen ist, wobei die Auswahldaten in der Kundendatenbank (DB1) speicherbar sind und die in der zweiten Datenbank (DB2) gespeicherte Werbeinformation in Abhängigkeit der Auswahldaten nach Anforderung an den Kunden versendet wird.

3. Einrichtung nach Anspruch 1, **dadurch gekennzeichnet, dass** eine weitere Datenbank (DB3) zur Speicherung statistischer Daten vorgesehen ist.

4. Einrichtung nach einem der Ansprüche 1 bis 3, **dadurch gekennzeichnet, dass** die Bearbeitungseinheit (2) durch einen Computer gebildet ist.

5. Einrichtung nach einem der Ansprüche 1 bis 3, **dadurch gekennzeichnet, dass** die Bearbeitungseinheit (2) durch ein Telefon, insbesondere ein Mobiltelefon gebildet ist.

6. Einrichtung nach einem der Ansprüche 1 bis 3, **dadurch gekennzeichnet, dass** eine Einrichtung (5) zur Generierung eines Fragebogens od. dgl. vorgesehen ist, welcher Fragebogen od. dgl. mit der angeforderten Werbeinformation an den Kunden versendet wird, und dass die Bearbeitungseinheit (2) zur Eingabe von Antwortsdaten auf den Fragebogen od. dgl. vorgesehen ist, und dass diese Antwortsdaten in der Statistikdatenbank (DB3) ablegbar sind.

7. Einrichtung nach einem der Ansprüche 1 bis 6, **dadurch gekennzeichnet, dass** eine Prüfeinrichtung (9) zur Prüfung der Antwortsdaten auf den Fragebogen od.dgl. vor Erhöhung der Buchungsdaten in der Buchungsdatenbank (DB4) vorgesehen ist.

8. Einrichtung nach einem der Ansprüche 1 bis 7, **dadurch gekennzeichnet, dass** eine Auswahleinheit (6) vorgesehen ist, welche mit der Werbedatenbank (DB2) und der Statistikdatenbank (DB3) verbunden ist, und dass eine weitere Bearbeitungseinheit (7) vorgesehen ist, über welche Daten an die Auswahleinheit (6) übermittelbar sind, sodass die Werbeinformation der Werbedatenbank (DB2) aufgrund ausgewählter Daten der Statistiktdatenbank (DB3) ausgewählt wird.

9. Einrichtung nach einem der Ansprüche 1 bis 8, **dadurch gekennzeichnet, dass** eine Zeiterfassungseinheit (8) vorgesehen ist, welche die Zeiten der Anforderung von Werbeinformation von Kunden erfasst und in der Datenbank (DB1) und allenfalls der Datenbank (DB3) speichert.

10. Verfahren zum Versenden von Werbeinformation an Kunden über ein Kommunikationsmedium, insbesondere das Internet, umfassend das
- Eingeben und Senden der Kundendaten über das Kommunikationsmedium,
- Speichern der Kundendaten in einer Datenbank,
- Anfordern der Werbeinformation durch den Kunden über das Kommunikationsmedium, und
- Versenden der Werbeinformation an den Kunden in Abhängigkeit der Anforderung, **gekennzeichnet durch** die mit dem Versenden der Werbeinformation gleichzeitige oder zeitverschobenen Übermittlung eines Fragebogens od. dergl. an den Kunden und die Zuweisung eines Guthabens an den Kunden nach Übermittlung der gewünschten Anwortsdaten.

11. Verfahren nach Anspruch 10, **dadurch gekennzeichnet,**
- **dass** der Kunde bestimmte Werbebranchen auswählt,
- **dass** diese Auswahl gespeichert wird, und
- **dass** die Werbeinformation der ausgewählten Werbebranchen auf Anforderung an den Kunden versendet wird.

12. Verfahren nach Anspruch 10 oder 11, **dadurch gekennzeichnet, dass** die Versendung der Werbeinformation zeitversetzt erfolgt.

13. Verfahren nach einem der Ansprüche 10 bis 12, **dadurch gekennzeichnet, dass** vor Zuweisung des Guthabens eine Überprüfung der Antwortsdaten erfolgt.

14. Verfahren nach einem der Ansprüche 10 bis 13, **dadurch gekennzeichnet, dass** die Dateneingabe und/oder Webeanforderung und/oder Werbeversendung über Internet erfolgt.

15. Verfahren nach einem der Ansprüche 10 bis 14, **dadurch gekennzeichnet, dass** die Dateneingabe und/oder Webeanforderung und/oder Werbeversendung über WAP erfolgt.

16. Verfahren nach einem der Ansprüche 10 bis 14, **dadurch gekennzeichnet, dass** die Dateneingabe und/oder Webeanforderung und/oder Werbeversendung über E-Mail erfolgt.
